# FASCICULE DE BREVET EUROPEEN

(11) **EP 2 297 009 B1**
(45) Date de publication et mention de la délivrance du brevet: **19.12.2012**
(21) Numéro de dépôt: 09761930.8
(22) Date de dépôt: 11.06.2009
(51) Int. Cl.: B65G 21/20, B65G 47/31, B65G 47/71

(54) **INSTALLATION DE CONVOYAGE MULTIVOIES.**
MEHRWEGEFÖRDERANLAGE
MULTIPATH CONVEYOR INSTALLATION

(30) Priorité: 13.06.2008 FR 0803276
(43) Date de publication de la demande: 23.03.2011
(73) Titulaire: Sidel Participations, 76930 Octeville sur Mer (FR)
(72) Inventeur: PETROVIC, Zmaj, F-76930 Octeville S/mer (FR); PERRIN, David, F-76930 Octeville S/mer (FR); TOUITOU, Haim, F-76930 Octeville S/mer (FR)
(74) Mandataire: Cabinet Plasseraud
(86) Numéro de dépôt international: PCT/FR2009/051097
(87) Numéro de publication internationale: WO 2009/150379

(56) Documents cités:
- FR-A- 1 420 368
- GB-A- 758 302
- GB-A- 896 425
- US-A- 2 615 555

## Description

La présente invention concerne une installation de convoyage d'articles du genre bouteilles, flacons ou autres, et en particulier une installation de convoyage qui fait la liaison entre des machines dont les cycle de fonctionnement sont différents, selon le préambule de la revendication 1. Une telle installation de convoyage multivoies est décrite dans le document GB-A-758302.

Elle concerne, par exemple, une installation de convoyage disposée entre une étiqueteuse où les articles, des bouteilles principalement, sortent à grande cadence en file indienne et une fardeleuse où la vitesse d'entrée desdits produits est divisée par le nombre de produits constituant le front qui est introduit dans ladite fardeleuse.

Elle concerne en particulier, dans cette installation de convoyage, le système de convoyage qui gère la vitesse d'avancement des produits entre les machines et en particulier la variation de cette vitesse d'avancement.

Généralement, ces systèmes de convoyage sont constitués de plusieurs convoyeurs disposés en cascade, formant un Oméga, par exemple, et animés l'un par rapport à l'autre de vitesses différentes pour effectuer, graduellement, par étapes, une réduction de la vitesse d'avancement du flux de bouteilles.

La largeur de la surface active de chaque convoyeur correspond généralement au moins à la largeur du front de bouteilles qui arrive devant la fardeleuse.

Les bouteilles peuvent être soit canalisées dans un couloir unique, soit être dispatchées dans plusieurs couloirs adjacents.

Ces couloirs sont disposés au-dessus de la surface, ou sole, de convoyage et ils sont délimités par des parois de guidage qui sont portées par des structures appropriées relativement rigides.

Pour transférer le flux de produits d'un convoyeur à l'autre, les parois du ou des couloirs font office de déviateurs; elles sont inclinées par rapport au sens d'avancement des bouteilles.

Cette inclinaison peut, selon son importance et la vitesse d'évolution des produits, imposer des accélérations importantes aux bouteilles et générer des incidents.

Hormis les chutes et/ou coincements, les bouteilles sont aussi sujettes à des phénomènes de frottement intense sur les parois de déviation.

Dans le cas d'un système de convoyage à couloirs multiples où l'on trouve des parois qui sont communes à deux couloirs adjacents, le convoyage des bouteilles peut aussi être perturbé par des problèmes d'interférence entre lesdits couloirs adjacents. La pression que peuvent exercer les bouteilles sur la paroi commune de deux couloirs adjacents peut générer une déformation de cette paroi et cette déformation peut provoquer un blocage des bouteilles dans le couloir dont la largeur est altérée.

De plus, ces convoyeurs multivoies ne sont pas appropriés pour accueillir des bouteilles de formats différents. Un changement de format impose en effet une modification de la position de pratiquement toutes les parois avec, en plus, des écarts qui s'additionnent.

La présente invention propose un système de convoyage qui permet de résoudre ces différents problèmes. Il peut s'implanter et s'intégrer très facilement dans des chaînes de traitement d'articles du genre bouteilles et il permet aussi d'accueillir des articles de formats très différents.

Ce système de convoyage permet d'établir, en fonction des besoins, une variation progressive de la vitesse des articles depuis l'entrée jusqu'à la sortie dudit système et il sera dénommé, dans la suite du texte: vario-convoyeur.

Ce vario-convoyeur selon l'invention apporte une solution fiable et efficace au guidage des bouteilles, même à grande vitesse. Il offre également la possibilité d'améliorer la compacité de ce genre d'installation qui intègre le vario-convoyeur.

Sa conception originale permet d'alléger la construction et de simplifier sa réalisation. Il supprime les contraintes qui imposaient une très grande rigidité et une grande précision au niveau des parois des différents couloirs pour surmonter les problèmes de déformations et d'interférences entre les couloirs.

Le vario-convoyeur selon l'invention est du type multivoies, permettant de gérer des vitesses d'articles du genre bouteilles, ou autres récipients, entre deux postes d'intervention, lesdites bouteilles ayant été préalablement dispatchées en plusieurs trains répartis dans les différentes voies en forme de couloirs unifilaire en forme d'Oméga, lesquels couloirs sont constitués chacun de leur propre sole de convoyage et d'une paire de parois distinctes disposées au-dessus de chaque sole pour guider isolément chaque train de bouteilles.

Cet aménagement permet de supprimer les risques d'interférences entre deux couloirs adjacents et notamment les risques liés aux déformations des parois séparatrices.

Toujours selon l'invention, chaque sole est constituée d'une succession de chaînes de convoyage dont les vitesses de préférence varient de l'une à l'autre, lesquelles chaînes sont disposées en oméga, c'est-à-dire que l'extrémité aval de l'une côtoie l'extrémité amont de la suivante pour permettre le passage des articles d'une chaîne à l'autre, guidés par les parois du couloir correspondant.

Selon une disposition de l'invention, les extrémités des chaînes adjacentes d'une même sole se côtoient sur une longueur appropriée qui est notamment fonction de la vitesse, ou cadence, et de la stabilité des articles convoyés.

Selon une autre disposition de l'invention, la structure de convoyage comprend, pour chaque couloir, une paroi de guidage faisant office de rive droite et une paroi faisant office de rive gauche, les parois en vis-à-vis de deux couloirs adjacents étant séparées d'un intervalle dont la valeur correspond au moins à la différence de dimensions des articles susceptibles de circuler dans lesdits couloirs.

Selon une autre disposition de l'invention, le vario-convoyeur comporte, pour chaque couloir, une paroi fixe faisant office de référence, solidaire du châssis dudit vario-convoyeur, et une paroi mobile, chaque paroi mobile étant portée par une structure qui est guidée transversalement sur ledit châssis et dont la position est réglable par le biais de moyens d'actionnement appropriés.

Selon une autre disposition de l'invention, le vario-convoyeur comporte une structure fixe qui porte les parois fixes des couloirs, laquelle structure fixe sert de support et de guide pour la structure qui porte les parois mobiles par l'intermédiaire de moyens appropriés du genre glissières.

Selon une autre disposition de l'invention, les structures qui portent les parois fixes et les parois mobiles des couloirs sont installées sous la surface de convoyage des articles.

Selon une variante de réalisation de l'invention, les structures qui portent les parois fixes et les parois mobiles des couloirs sont disposées au-dessus de la surface de convoyage des articles.

Selon une autre disposition de l'invention, les moyens d'actionnement des structures mobiles sont constitués de systèmes vis-écrou, lesquels systèmes sont mis en oeuvre par le biais de moyens de manoeuvre appropriés.

L'invention peut également comporter les caractéristiques suivantes, prises séparément ou en combinaison :
- l'écrou peut être flottant ;
- les moyens de manoeuvre appropriés sont constitués d'une manivelle qui est qui est solidaire de la vis ;
- les moyens de manoeuvre appropriés comportent un renvoi d'angle comprenant une roue dentée qui est solidaire en rotation de la vis et un arbre souple fileté qui court latéralement sur la longueur du châssis, commandé par des moyens moteur électriques ;

L'invention concerne également une ligne de gestion de la vitesse d'un flux d'articles du type bouteilles, flacons ou autres produits, entre une machine du genre étiqueteuse et une machine du genre fardeleuse, et en particulier une ligne qui comprend une structure de convoyage en forme de vario-convoyeur telle que détaillée auparavant.

L'invention sera encore détaillée à l'aide de la description suivante et des dessins annexés, donnés à titre indicatif, et dans lesquels:
- la figure 1 montre les différents éléments constitutifs d'une installation de convoyage d'articles du genre bouteilles entre, par exemple, une étiqueteuse et une fardeleuse, laquelle installation de convoyage comprend le vario-convoyeur selon l'invention;
- la figure 2 montre, schématiquement, le système de convoyage traditionnel, tel qu'utilisé dans les installations du type de celle représentée figure 1;
- la figure 3 représente le vario-convoyeur selon l'invention, comparé à celui de l'état de la technique qui est détaillé figure 2;
- la figure 4 est une vue en plan de la partie amont du vario-convoyeur représenté figure 3, avec les couloirs de guidage des trains de bouteilles;
- la figure 5 montre les coupes partielles AA et BB de la figure 4 pour des couloirs dont la largeur est réglable;
- les figures 6 et 7 représentent une variante de réalisation des moyens de réglage de la largeur des couloirs montrant respectivement des positions extrêmes des parois des couloirs, adaptées aux dimensions des bouteilles,
- la figure 8 est un agrandissement d'une partie de l'installation montrant des moyens assurant le réglage de la largeur des couloirs, et
- la figure 9 montre l'installation illustrée en figure 5, comprenant un autre mode de réalisation des moyens de réglage de la largeur des couloirs.

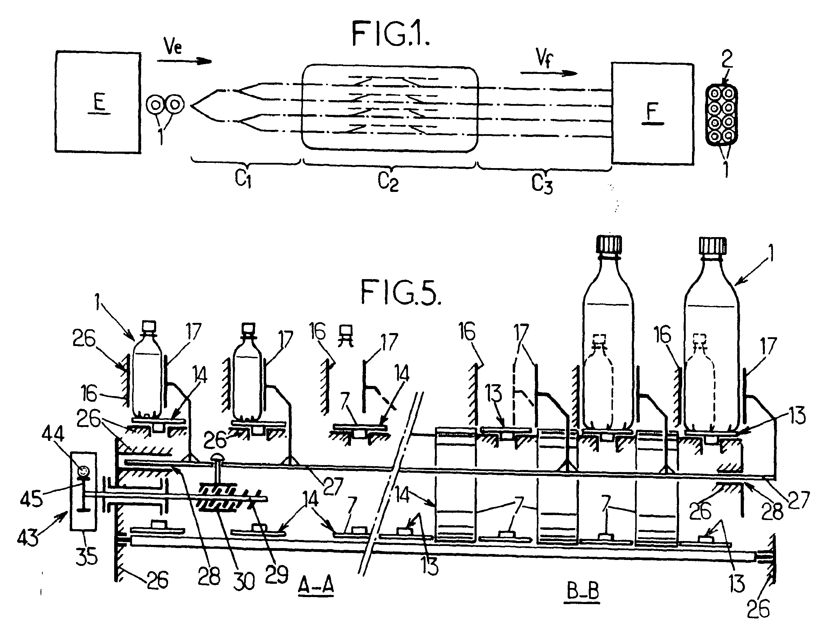

La figure 1 représente, schématiquement, une ligne de préparation de packs d'articles du genre bouteilles 1. Cette ligne comprend, à l'entrée, une étiqueteuse E et, à l'extrémité, une fardeleuse F avec, entre les deux, une installation de convoyage.

Cette installation de convoyage est constituée de plusieurs systèmes de convoyage spécialisés qui permettent de gérer la variation de vitesse qu'il convient de donner aux bouteilles 1 pour les faire passer de la vitesse Ve, au niveau de la sortie de l'étiqueteuse E, à une vitesse Vf à l'entrée de la fardeleuse F.

L'installation de convoyage comprend:
- un premier système de convoyage C1 qui, partant d'une voie unique, dispatche les bouteilles 1 sous forme de trains, sur plusieurs files,
- un second système de convoyage C2 multivoies, correspondant au vario-convoyeur de l'invention, au niveau duquel s'effectue le changement de vitesse des bouteilles 1 et,
- un troisième système de convoyage C3 au niveau duquel s'effectuent l'accumulation des bouteilles 1 et la préparation des lots avec ces bouteilles 1 avant leur introduction dans la fardeleuse F. En sortie de la fardeleuse, les bouteilles 1 sont regroupées sous la forme d'un pack 2.

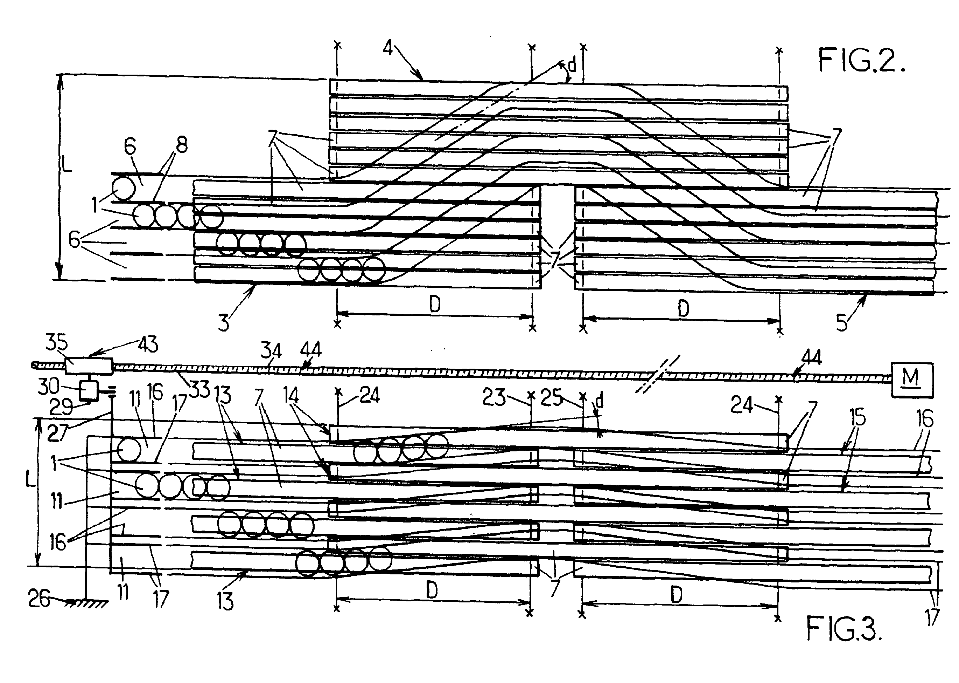

Le système de convoyage C2 est représenté figure 2 dans une configuration traditionnelle qui correspond à l'état de la technique. Il est constitué de plusieurs convoyeurs 3, 4 et 5 juxtaposés dont la largeur globale peut varier entre l'entrée et la sortie; généralement cette largeur est uniforme et elle correspond à la largeur du lot de bouteilles 1 qui se présente devant la fardeleuse F.

Ce système de convoyage représenté figure 2 comporte plusieurs couloirs 6 dans lesquels ont été dispatchés les trains de bouteilles 1.

Ces convoyeurs 3, 4 et 5 sont constitués de plusieurs chaînes 7 qui forment la surface de la sole sur laquelle reposent et glissent les bouteilles 1. Cette sole peut avoir une largeur qui correspond au moins à la somme des largeurs des couloirs 6, c'est-à-dire à la largeur du lot de bouteilles 1 qui se présente à l'entrée de la fardeleuse F, comme indiqué précédemment.

On remarque aussi, en figure 2, que le nombre de chaînes 7 peut être plus important que le nombre de couloirs 6.

Ce système de convoyage C2, qui correspond à l'état de la technique, a une largeur totale L qui est de l'ordre de deux fois la somme des largeurs des couloirs 6.

Ces couloirs 6 sont délimités par des parois 8 dont le nombre correspond au nombre de couloirs 6 plus un. Ces parois 8 servent de guides et, en même temps, de déviateurs pour faire passer les produits 1 du convoyeur 3 au convoyeur 4 et de ce dernier au convoyeur 5 avec, à chaque fois, une variation de la vitesse des différents trains de bouteilles.

Dans la zone de déviation, les parois 8 sont inclinées par rapport au sens d'avancement des convoyeurs 3 à 5 ; cette inclinaison forme un angle d qui est établi en fonction de plusieurs paramètres liés notamment à la cadence, à la stabilité des bouteilles et aussi à la place qui est disponible entre la machine d'étiquetage et la fardeleuse pour loger toute l'installation de convoyage.

La figure 3 représente le système de convoyage C2 selon l'invention, dénommé vario-convoyeur.

Ce vario-convoyeur C2 est constitué, comme précédemment, de plusieurs couloirs 11, au nombre de quatre, par exemple, et chaque couloir est attaché à une série de trois convoyeurs 13, 14 et 15 distincts, unifilaires.

Ces trois convoyeurs 13 à 15 sont disposés en forme d'oméga, comme les convoyeurs 3 à 5 de la figure 2.

Chaque couloir 11 est constitué d'une suite de convoyeurs 13 à 15 qui comportent chacun une chaîne 7 unique et chaque couloir 11 est délimité par deux parois 16, 17 latérales qui lui sont propres. Le nombre de parois 16 et 17 est exactement le double du nombre de couloirs 11 et chaque train de bouteilles 1 est donc guidé par ses propres parois 16 et 17 ; il n'y a pas de parois communes comme c'est le cas pour le système de convoyage traditionnel représenté figure 2.

Toutes les parois 16 sont fixes sur l'installation, tandis que toutes les parois 17 sont montées mobiles et sont, pour ce faire, reliées entre elles et reliées à des moyens permettant de régler la largeur des couloirs 11, en fonction du diamètre des bouteilles à convoyer. De tels moyens de réglage seront davantage décrits par la suite.

On remarque que la largeur totale L du vario-convoyeur selon l'invention correspond à la largeur d'une paire de chaînes 7 multipliée par le nombre de couloirs 11.

Par rapport à la largeur des convoyeurs 13 à 15 représentés figure 2, la largeur du vario-convoyeur C2 selon l'invention, représenté figure 3, est un tiers plus faible.

On remarque également qu'en ayant une même valeur D de coudoiement, l'angle d de déviation des bouteilles 1 est particulièrement faible dans le cas du vario-convoyeur selon l'invention, figure 3, par rapport à celui de l'état de la technique représenté figure 2.

Le coudoiement D, c'est-à-dire la longueur selon laquelle les extrémités de deux chaînes d'une même sole se côtoient, est fonction de la vitesse, ou cadence, des articles et surtout de leur stabilité

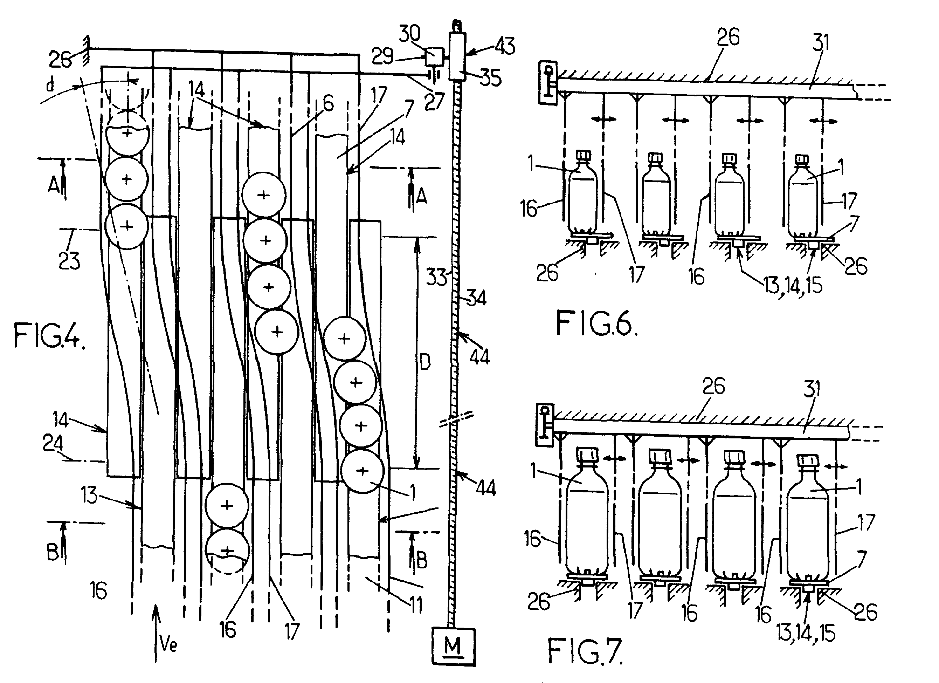

La figure 4 montre, à une plus grande échelle, la partie amont du vario-convoyeur C2 selon l'invention qui est représenté figure 3, au niveau de la déviation des bouteilles 1.

Les bouteilles 1 arrivent sous forme de trains dans les différents couloirs 11 ; elles sont entraînées par la chaîne du convoyeur 13, à une vitesse Ve et elles passent ensuite, guidées par les parois 16 et 17, sur le deuxième convoyeur 14 dont la vitesse est inférieure à celle du convoyeur 13 précédent.

On remarque que les extrémités des convoyeurs 13 sont disposées sur un arbre commun 23 et que les extrémités des convoyeurs 14 sont, de la même façon, disposées sur un arbre 24 commun. Les extrémités des convoyeurs 15 sont disposées, elles aussi, sur un arbre 25 commun.

Les bouteilles 1 passent d'un convoyeur 13 à l'autre 14 avec un angle d de déviation relativement faible, lequel angle dépend de la largeur desdits convoyeurs et de leur distance D de coudoiement.

La largeur de chaque couloir 11 est inférieure à la largeur d'un couple de chaînes 7 de convoyeur 13, 14.

Les couloirs 11 étant indépendants, chacun peut comporter des moyens de réglage de sa largeur pour l'adapter aux articles à guider.

On peut aussi, comme détaillé sur les figures suivantes 5 à 9, réaliser un système de réglage qui comprend une paroi 16 fixe et une paroi 17 mobile.

Les figures 6 et 7 montrent un aménagement de ce type avec des parois 16 qui sont fixes et des parois 17 qui sont mobiles transversalement pour modifier la largeur des couloirs 11 en fonction du type de bouteilles 1 à gérer.

La figure 5 montre, d'une façon plus détaillée, un aménagement des parois formant les couloirs, lequel aménagement présente la particularité de laisser libre le dessus de l'installation de convoyage et, par conséquent, d'offrir une vue totalement dégagée sur les bouteilles 1.

La figure 5 montre le vario-convoyeur sous la forme d'une élévation avec deux coupes partielles: d'une part, une coupe AA au niveau des convoyeurs 14, montrant le guidage des bouteilles 1 de petite taille et, d'autre part, une coupe BB au niveau des convoyeurs 13, montrant le guidage de bouteilles 1 de grande taille.

Ce vario-convoyeur comprend un châssis 26 général, sur lequel sont guidées les chaînes 7 des différents convoyeurs.

Les parois 16 des différents couloirs 11 sont fixes, portées par une structure qui correspond au châssis 26 alors que les parois 17 sont mobiles transversalement, portées par une structure appropriée détaillée ci-après.

Ces parois 17 sont montées sur une structure 27 qui est guidée transversalement au moyen d'un système de glissières 28 aménagées sur ledit châssis 26. De préférence, cette structure 27 est guidée sur le châssis 26 qui porte les parois 16 fixes.

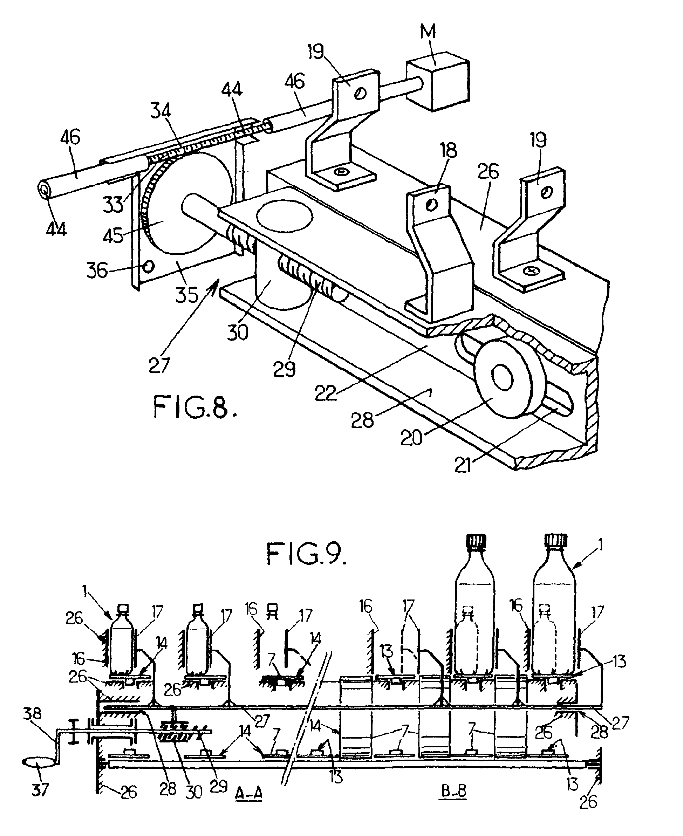

En particulier, comme le montre la figure 8, les parois 17 mobiles sont fixées sur au moins une glissière 28 au moyens de pattes 18 de fixation.

Les parois 16 fixes sont fixées sur le châssis 26 par des pattes 19 de fixation.

La glissière 28 présente une forme en U. Elle est adossée au châssis 26 et elle est guidée grâce à un système à galet 20, dont l'axe est fixé audit châssis 26, laquelle glissière est montée libre en déplacement sur l'axe du galet 20 au moyen d'une ouverture 21 linéaire ménagée dans le fond 22 du U de ladite glissière 28.

La structure 27 est mobile sous l'effet d'un mécanisme de manoeuvre approprié du type vis 29 et écrou 30.

Dans l'exemple de réalisation illustré sur les figures 5 à 8, l'écrou 30 est du type flottant, pour réduire les frottements de ce dernier avec la vis et faciliter le mouvement de la vis dans ledit écrou.

Ce type de structure 27 et de mécanisme de manoeuvre se répète régulièrement sur la longueur du vario-convoyeur pour assurer une certaine rigidité aux différentes parois 17 qui constituent l'un des côtés des couloirs 11.

Les différents mécanismes de manoeuvre fonctionnent de façon coordonnée en étant manipulés ensemble au moyen d'un système 43 doté d'un renvoi d'angle, et d'un arbre 44 commun filant latéralement le long du châssis vario-convoyeur.

Plus précisément, le système 43 doté d'un renvoi d'angle comporte une roue 45 dentée (figure 8) qui est solidaire en mouvement de la vis 29.

Les dents de la roue 45 dentée sont en prise avec un filetage de l'arbre 44 de sorte que, quand l'arbre 44 est entraîné en rotation, il entraîne en rotation la roue 45.

Dans le cadre de cet exemple de réalisation, l'arbre 24 est souple.

Un tel arbre souple est plus facile à installer et s'inscrit aisément en courbe, de sorte qu'il épouse la forme de l'installation, d'un système 23 de manoeuvre à un système 23 de manoeuvre adjacent.

Dans le cadre de cet exemple de réalisation, le fil est entouré de telle manière que le couple arbre / roue dentée présente un rapport de un sur quarante. Autrement dit, quand l'arbre 44 est entraîné en rotation, il lui faut tourner quarante fois sur lui -même pour que la roue réalise un tour sur elle-même.

Il devra être compris qu'un tel câble pourrait être réalisé différemment sans sortir du cadre de l'invention.

Le système 43 de renvoi d'angle est fixé sur une paroi latérale de l'installation, qui est facilement accessible au cas où une maintenance serait nécessaire.

De préférence, le système 43 de renvoi d'angle est fixé sur la paroi extérieure de l'installation, quand l'installation présente des courbes.

Pour éviter tout encrassement de la roue 45 dentée, ou plus largement du système 43 de renvoi d'angle, la roue 45 dentée est enfermée dans un boîtier 35 qui est fermé, et qui présente des moyens pour l'ouvrir facilement (pour réaliser une maintenance), tels que des trous traversants 36 réalisés dans une première coque du boîtier, coopérant avec des trous borgnes filetés réalisés dans une seconde coque du boîtier, aptes à accueillir une vis (non représentée).

L'arbre 44 peut être logé dans une gaine 46 fixe, qui s'étend entre les systèmes 43 de renvoi d'angle.

L'aménagement représenté figure 5 se retrouve également en figures 6 et 7; la structure 27, qui porte les parois 17 mobiles, est logée et guidée au moyen d'un système de glissière sur une traverse 31 en forme de portique, qui est solidaire du châssis 26 du vario-convoyeur, et qui se situe au-dessus de la surface de convoyage des bouteilles 1.

Il devra être entendu que l'invention ne se limite pas à la présence d'un tel système 43 de manoeuvre, et qu'elle pourrait comporter d'autres moyens équivalents.

En particulier, sans sortir du cadre de l'invention, le système de manoeuvre pourrait être réalisé par une manivelle 37, comme le montre la figure 9.

Le bras 38 de la manivelle 37 pourrait alors être directement relié à une vis 29' coopérant avec un écrou 30'.

On notera que l'écrou 30' peut ne pas être un écrou flottant, comme le montre la figure 9.

On comprend de la description qui précède comment l'installation selon l'invention s'adapte à tous gabarits de bouteilles, et comment elle permet une variation de vitesse des bouteilles d'un poste à un autre.

## Revendications

1. Installation de convoyage multivoies, pour gérer des vitesses d'articles entre deux postes d'intervention, lesdits articles, du genre bouteilles (1), ou autres récipients, ayant été dispatchés en plusieurs trains répartis dans les différentes voies en forme de couloirs (11) unifilaires, **caractérisée en ce que** lesdits couloirs sont disposés en forme d'Oméga et sont constitués chacun de leur propre sole de convoyage et d'une paire de parois (16, 17) distinctes, disposées au-dessus de ladite sole pour guider isolément chaque train de bouteilles (1), chaque sole étant constituée d'une succession de chaînes (7), lesquelles chaînes (7) étant disposées en oméga, c'est-à-dire que l'extrémité aval de l'une côtoie l'extrémité amont de la suivante pour permettre le passage des bouteilles (1) d'une chaîne à l'autre, guidées par les parois (16, 17) du couloir (11) correspondant.

2. Installation de convoyage multivoies selon la revendication 1, **caractérisée en ce que** desdites chaînes les vitesses varient de l'une à l'autre.

3. Installation de convoyage selon la revendication 2, **caractérisée en ce que** les extrémités de chaînes (7) adjacentes d'une même sole se côtoient sur une longueur appropriée qui est fonction de la cadence et de la stabilité des bouteilles (1).

4. Installation de convoyage selon l'une quelconque des revendications 1 à 3, **caractérisée en ce qu'**elle comprend, pour chaque couloir (11), une paroi (16) de guidage faisant office de rive droite et une paroi (17) faisant office de rive gauche, les parois (16, 17) en vis-à-vis de deux couloirs (11) adjacents étant séparées d'un intervalle dont la valeur correspond au moins à la différence de largeur des articles qui sont susceptibles de passer dans lesdits couloirs (11).

5. Installation de convoyage selon la revendication 4, **caractérisée en ce qu'**elle comporte, pour chaque couloir (11), une paroi (16) fixe faisant office de référence, solidaire du châssis (26), et une paroi (17) mobile, chaque paroi (17) mobile étant portée par une structure (27) qui est guidée transversalement sur ledit châssis (26) et dont la position est réglable par le biais de moyens appropriés.

6. Installation de convoyage selon la revendication 5, **caractérisée en ce que** les parois (16) fixes des couloirs (11) sont portées par le châssis (26), lequel châssis sert de support et de guide pour la structure (27) qui porte les parois (17) mobiles.

7. Installation de convoyage selon la revendication 6, **caractérisée en ce qu'**elle comporte des structures porteuses pour les parois (16, 17) des couloirs (11), lesquelles structures sont installées sous la surface de convoyage des articles.

8. Installation de convoyage selon la revendication 6, **caractérisée en ce qu'**elle comporte des structures porteuses pour les parois (16, 17) des couloirs (11), lesquelles structures sont installées au-dessus de la surface de convoyage des articles.

9. Installation de convoyage selon l'une quelconque des revendications 7 ou 8, **caractérisée en ce que** les moyens de manoeuvre des structures (27) mobiles sont constitués de systèmes vis (29 ; 29')-écrou (30 ; 30'), lesquels systèmes fonctionnent de façon coordonnée par le biais de moyens de manoeuvre appropriés.

10. Installation de convoyage selon la revendication 9, **caractérisée en ce que** ledit écrou (30) est flottant.

11. Installation de convoyage selon la revendication 9 ou 10, **caractérisée en ce que** les moyens de manoeuvre appropriés sont constitués d'une manivelle (37) qui est solidaire de la vis (29').

12. Installation de convoyage selon la revendication 9 ou 10, **caractérisée en ce que** les moyens de manoeuvre appropriés comportent un renvoi d'angle (43) comprenant une roue (45) dentée qui est solidaire en rotation de la vis (29) et un arbre (44) souple fileté qui court latéralement sur la longueur du châssis, commandé par des moyens moteur (M) électriques.

13. Ligne de gestion de la vitesse d'un flux de produits entre une machine du genre étiqueteuse et une machine du genre fardeleuse, **caractérisée en ce qu'**elle comprend une installation de convoyage selon l'une quelconque des revendications 1 à 12.

## Claims

1. A multipath conveyor installation, for controlling the speeds of items between two workstations, said items, of the bottle kind (1), or other containers, having been dispatched in several strings distributed across the various paths in the form of single-file lanes (11), **characterized in that** said lanes are in the shape of an omega and each consist of their own conveyor baseplate and of a pair of distinct walls (16, 17), arranged above said baseplate, to guide each string of bottles (1) separately, each baseplate consisting of a succession of chains (7), which chains (7) are arranged in an omega shape, that is to say that the downstream end of one borders on the upstream end of the next to allow the bottles (1) to pass from one chain to the other, guided by the walls (16, 17) of the corresponding lane (11).

2. The multipath conveyor installation as claimed in claim 1, **characterized in that** the speeds of said chains vary from one to the other.

3. The conveyor installation as claimed in claim 2, **characterized in that** the ends of adjacent chains (7) of one and the same baseplate border one another over an appropriate length which is dependent on the rate and stability of the bottles (1).

4. The conveyor installation as claimed in any one of claims 1 to 3, **characterized in that** it comprises, for each lane (11), a guide wall (16) that acts as a right edge and a wall (17) that acts as a left edge, the opposing walls (16, 17) of two adjacent lanes (11) being separated by a space the magnitude of which corresponds at least to the difference in width of the items which are likely to pass along said lanes (11).

5. The conveyor installation as claimed in claim 4, **characterized in that** it comprises, for each lane (11), a fixed wall (16) acting as a reference, secured to the chassis (26), and a moving wall (17), each moving wall (17) being carried by a structure (27) which is guided transversely on said chassis (26) and the position of which can be adjusted through appropriate means.

6. The conveyor installation as claimed in claim 5, **characterized in that** the fixed walls (16) of the lanes (11) are carried by the chassis (26), which chassis serves to support and guide the structure (27) which carries the moving walls (17).

7. The conveyor installation as claimed in claim 6, **characterized in that** it comprises supporting structures for the walls (16, 17) of the lanes (11), which structures are installed under the item conveying surface.

8. The conveyor installation as claimed in claim 6, **characterized in that** it comprises supporting structures for the walls (16, 17) of the lanes (11), which structures are installed above the item conveying surface.

9. The conveyor installation as claimed in either one of claims 7 and 8, **characterized in that** the means for maneuvering the moving structures (27) consist of screw (29; 29') -nut (30; 30') systems, which systems are operated in a coordinated manner through suitable maneuvering means.

10. The conveyor installation as claimed in claim 9, **characterized in that** said nut (30) is a floating nut.

11. The conveyor installation as claimed in claim 9 or 10, **characterized in that** the appropriate maneuvering means consist of a crank (37) which is secured to the screw (29').

12. The conveyor installation as claimed in claim 9 or 10, **characterized in that** the appropriate maneuvering means comprise an angle transmission (43) comprising a gearwheel (45) which rotates as one with the screw (29) and a threaded flexible shaft (44) which runs laterally along the length of the chassis, controlled by electric motor means (M).

13. A line for controlling the speed of a stream of products between a machine of the labeling machine kind and a machine of the pallet wrapping machine kind, **characterized in that** it comprises a conveyor installation as claimed in any one of claims 1 to 12.

## Patentansprüche

1. Mehrbahnige Transportvorrichtung, zum Steuern der Geschwindigkeiten von Artikeln zwischen zwei Bearbeitungsstationen, wobei die Flaschenartikel (1) oder andere Behälter als eine Vielzahl von auf verschiedenen Bahnen in Form einadriger Gänge (11) verteilten Zügen abgegeben werden, **dadurch gekennzeichnet, dass** die Gänge omegaförmig angeordnet sind und jeweils mit einem eigenen Transportboden und einem Paar getrennter oberhalb des Bodens angeordneter Wände (16, 17) ausgebildet sind, um jeden Zug von Flaschen (1) getrennt zu führen, wobei jeder Boden durch aufeinanderfolgende Förderbänder (7) ausgebildet ist, die in Form eines Omegas angeordnet sind, wobei ein stromabwärtiges Ende des einen an das stromaufwärtige des nachfolgenden grenzt, um den Durchgang der Flaschen (1) von einem Förderband zum anderen, durch die Wände (16, 17) des jeweiligen Gangs (11) geführt, zu ermöglichen.

2. Mehrbahnige Transportvorrichtung nach Anspruch 1, **dadurch gekennzeichnet, dass** sich die Geschwindigkeiten der Förderbänder voneinander unterscheiden.

3. Transportvorrichtung nach Anspruch 2, **dadurch gekennzeichnet, dass** die aneinanderliegenden Enden der Förderbänder (7) eines gleichen Bodens über eine von der Geschwindigkeit und Stabilität der Flaschen (1) abhängigen angemessenen Länge aneinandergrenzen.

4. Transportvorrichtung nach einem der Ansprüche 1 bis 3, **dadurch gekennzeichnet, dass** sie für jeden Gang (11) eine als rechte Seite dienende Führungswand (16) und eine als linke Seite dienende Führungswand (17) aufweist, wobei die Wände (16, 17) zweier gegenüberliegender aneinanderliegender Gänge (11) mit einem Abstand getrennt sind, dessen Wert mindestens dem Unterschied in der Breite der Artikel entspricht, die für den Durchgang durch die Gänge (11) geeignet sind.

5. Transportvorrichtung nach Anspruch 4, **dadurch gekennzeichnet, dass** sie für jeden Gang (11) eine mit einem Grundgestell (26) verbundene feststehende Wand (16) aufweist, die als Bezugspunkt dient, und eine bewegliche Wand (17), wobei jede bewegliche Wand (17) durch eine Struktur (27) getragen wird, die quer auf dem Grundgestell (26) geführt ist, und deren Position durch ein geeignetes Mittel einstellbar ist.

6. Transportvorrichtung nach Anspruch 5, **dadurch gekennzeichnet, dass** die feststehenden Wände (16) der Gänge (11) durch das Grundgestell (26) getragen werden, wobei das Grundgestell als Unterstützung und Führung für die Struktur (27) dient, die die bewegliche Wand (17) trägt.

7. Transportvorrichtung nach Anspruch 6, **dadurch gekennzeichnet, dass** sie Tragestrukturen für die Wände (16, 17) der Gänge (11) aufweist, wobei die Strukturen unter der Transportfläche für die Artikel angeordnet sind.

8. Transportvorrichtung nach Anspruch 6, **dadurch gekennzeichnet, dass** die Tragestrukturen für die Wände (16, 17) der Gänge (11) aufweist, wobei die Strukturen oberhalb der Transportfläche für die Artikel angeordnet sind.

9. Transportvorrichtung nach Anspruch 7 oder 8, **dadurch gekennzeichnet, dass** das Bewegungsmittel für die beweglichen Strukturen (27) aus einer Schnecke (29; 29') und einer Mutter (30; 30') gebildet ist, wobei die Systeme durch das geeignete Bewegungsmittel funktionieren.

10. Transportvorrichtung nach Anspruch 9, **dadurch gekennzeichnet, dass** die Mutter (30) schwimmend ist.

11. Transportvorrichtung nach Anspruch 9 oder 10, **dadurch gekennzeichnet, dass** das geeignete Bewegungsmittel durch eine Kurbel (37) gebildet wird, die mit der Schnecke (29') verbunden ist.

12. Transportvorrichtung nach Anspruch 9 oder 10, **dadurch gekennzeichnet, dass** das geeignete Bewegungsmittel ein Winkelgetriebe (43) mit einem Zahnrad (45) aufweist, das drehbar mit der Schnecke (29) und einer Welle (44) mit geschnittenen Gängen verbunden ist, die mittels eines Elektromotors (M) betrieben seitlich zur Breite des Grundgestells läuft.

13. Geschwindigkeitssteuerungslinie für einen Strom von Produkten zwischen einer Etikettiermaschine und einer Folienverpackungsmaschine, **dadurch gekennzeichnet**, das sie eine Transportvorrichtung nach einem der Ansprüche 1 bis 12 aufweist.
